# EUROPÄISCHE PATENTSCHRIFT

(11) **EP 3 867 090 B1**
(45) Veröffentlichungstag und Bekanntmachung des Hinweises auf die Patenterteilung: **24.08.2022**
(21) Anmeldenummer: 19783496.3
(22) Anmeldetag: 04.10.2019
(51) Int. Cl.: B60K 35/00, B60K 37/06, G05G 5/05, G06F 3/01, G06F 3/0488

(54) **BEDIENEINRICHTUNG FÜR EINE FAHRZEUGKOMPONENTE EINES KRAFTFAHRZEUGS SOWIE KRAFTFAHRZEUG**
OPERATOR CONTROL DEVICE FOR A VEHICLE COMPONENT OF A MOTOR VEHICLE AND MOTOR VEHICLE
DISPOSITIF D'UTILISATION POUR UN COMPOSANT DE VÉHICULE D'UN VÉHICULE AUTOMOBILE, ET VÉHICULE AUTOMOBILE

(30) Priorität: 18.10.2018 DE 102018217865
(43) Veröffentlichungstag der Anmeldung: 25.08.2021
(73) Patentinhaber: Audi AG, 85045 Ingolstadt (DE)
(72) Erfinder: SPAHMANN, Andreas, 74196 Neuenstadt (DE)
(86) Internationale Anmeldenummer: PCT/EP2019/076871
(87) Internationale Veröffentlichungsnummer: WO 2020/078737

(56) Entgegenhaltungen:
- WO-A1-2015/086589
- WO-A1-2016/012277
- DE-A1-102011 089 400
- US-A1- 2013 194 210
- US-A1- 2014 218 324

## Beschreibung

Die Erfindung betrifft eine Bedieneinrichtung für eine Fahrzeugkomponente eines Kraftfahrzeugs gemäß dem Oberbegriff des unabhängigen Patentanspruchs sowie ein Kraftfahrzeug.

Ein Bedienfeld für ein Kraftfahrzeug ist aus der DE 10 2010 026 910 A1 bekannt. Dieses Bedienfeld umfasst eine Vielzahl von Funktionsbereichen, wobei über die Funktionsbereiche abhängig von einer manuellen Krafteinwirkung pro Funktionsbereich eine zugeordnete Schaltfunktion schaltbar ist. Des Weiteren umfasst das Bedienfeld eine Krafteinwirkungserkennungsvorrichtung, mittels welcher abhängig von der Krafteinwirkung auf den jeweiligen Funktionsbereich die jeweilige zugeordnete Schaltfunktion schaltbar ist. Des Weiteren umfasst das Bedienfeld eine Rückmeldevorrichtung, mittels der eine haptische Rückmeldung auf die manuelle Krafteinwirkung erzeugbar ist. Des Weiteren weist das Bedienfeld eine Bedienungserkennung auf, mittels welcher zumindest ein Vorgang einer Annäherung an das Bedienfeld oder eine Berührung des Bedienfelds erkennbar und lokalisierbar ist. Außerdem weist das Bedienfeld eine der Rückmeldevorrichtung zugeordnete Sperrvorrichtung auf, mittels welcher die Rückmeldevorrichtung und die Krafteinwirkungserkennungsvorrichtung gesperrt und genau dann entsperrbar sind, falls der zumindest eine Vorgang erkannt und für genau einen der Funktionsbereiche lokalisiert ist.

Des Weiteren ist aus der WO 2017/162586 A1 eine Bedieneinheit für eine Fahrzeugkomponente mit einem Gehäuse bekannt, das ein Bedienelement mit einem Bedienfeld aufweist und zur Befestigung in einer Fahrzeuginstrumententafel oder Fahrzeugmittelkonsole vorgesehen ist. Das Bedienelement ist elastisch an dem Gehäuse gelagert. Die Bedieneinheit umfasst des Weiteren einen Sensor zur Erkennung einer Bedienung des Bedienelements sowie einen Aktuator zur bei Erkennung einer Bedienung des Bedienelements erfolgenden mechanischen Anregung des Bedienfelds. Überdies umfasst die Bedieneinheit ein Ausgleichsgewicht, welches bei Erkennung einer Bedienung des Bedienelements von dem Aktuator mechanisch anregbar ist und elastisch in und/oder am Gehäuse und/oder elastisch am Bedienelement gelagert ist. Das Ausgleichsgewicht ist zum im Wesentlichen Ausgleich einer Bewegung des Gehäuses bei Aktivierung des das Bedienelement mechanisch anregenden Aktuators bewegbar.

Überdies ist aus der DE 11 2011 101 553 B4 eine Vorrichtung mit einem Benutzerschnittstellenmodul sowie einem Vibrationsmechanismus bekannt. Der Vibrationsmechanismus ist dafür konfiguriert, das Benutzerschnittstellenmodul relativ zu einer Stützstruktur zu bewegen, um über das Benutzerschnittstellenmodul einen fühlbaren Effekt bereitzustellen. Die Vorrichtung umfasst des Weiteren ein Ausgleichselement, das dafür konfiguriert ist, einen Ausgleichseffekt bereitzustellen, indem es sich in die entgegengesetzte Richtung zur Bewegung des Benutzerschnittstellenmoduls relativ zur Stützstruktur bewegt, sodass die Stützstruktur der Vorrichtungen im Wesentlichen stabil bleibt.

Weitere Bedieneinrichtungen mit einem haptischen Bedienelement sind aus DE 10 2011 089400 A1, WO 2015/086589 A1, US 2014/218324 A1, US 2013/194210 A1 und WO 2016/012277 A1 bekannt.

Aufgabe der vorliegenden Erfindung ist es, eine Bedieneinrichtung für eine Fahrzeugkomponente eines Kraftfahrzeugs sowie ein Kraftfahrzeug mit einer Bedieneinrichtung zu schaffen, welche ein besonders vorteilhaftes Rückstellen eines passiven haptischen Bedienelements ermöglichen.

Diese Aufgabe wird erfindungsgemäß durch eine Bedieneinrichtung für eine Fahrzeugkomponente eines Kraftfahrzeugs mit den Merkmalen des Patentanspruchs 1 sowie durch ein Kraftfahrzeug mit einer Bedienkomponente mit den Merkmalen des Patentanspruchs 10 gelöst. Vorteilhafte Ausgestaltungen mit zweckmäßigen Weiterbildungen der Erfindung sind in den jeweils abhängigen Ansprüchen sowie in der folgenden Beschreibung angegeben.

Die Erfindung betrifft eine Bedieneinrichtung für eine Fahrzeugkomponente eines Kraftfahrzeugs. Diese Bedieneinrichtung umfasst ein Gehäuse sowie ein an dem Gehäuse angeordnetes Bedienelement. Das Bedienelement ist dazu eingerichtet, bei einer Betätigung des Bedienelements relativ zum Gehäuse in einer erste Bewegungsrichtung manuell bewegt zu werden. Bei dem Bedienelement handelt es sich insbesondere um einen Touchbildschirm. Mittels des Bedienelements können kleine bis sehr großflächige Bedienoberflächen bereitgestellt werden. Die Bedieneinrichtung umfasst des Weiteren ein Schalterelement, welches dazu eingerichtet ist, bei der Betätigung des Bedienelements einen Stromkreis zu schließen, um eine Aktion der Fahrzeugkomponente auszulösen. Insbesondere wird die Aktion der Fahrzeugkomponente bei einer Betätigung des Touchbildschirms durch Berührung und einem Schaltkontakt in dem Schalterelement ausgelöst. Bei dem Schalterelement kann es sich insbesondere um einen Mikroschalter und/oder um ein Piezoelement und/oder um eine Silikonschnappscheibe und/oder um wenigstens einen Silikondom handeln. Für eine besonders vorteilhafte Rückstellung des Bedienelements ist erfindungsgemäß eine mit dem Bedienelement gekoppelte Ausgleichsmasse vorgesehen. Insbesondere ist vorgesehen, dass die Ausgleichsmasse in der ersten Bewegungsrichtung des Bedienelements in Überdeckung mit dem Bedienelement angeordnet ist, um eine besonders platzsparende Ausgestaltung der Bedieneinrichtung zu ermöglichen. Die Ausgleichsmasse ist dazu eingerichtet, über eine mechanische Kopplungseinrichtung zumindest in einer zur ersten Bewegungsrichtung unterschiedlichen, zweiten Bewegungsrichtung bei einer Betätigung des Bedienelements bewegt zu werden und das Bedienelement nach dessen Betätigung über eine Gewichtskraft der Ausgleichsmasse rückzustellen. Hierbei kann die erste Bewegungsrichtung insbesondere entgegengesetzt und parallel zur zweiten Bewegungsrichtung verlaufen. Insbesondere ist das Bedienelement mit der Ausgleichsmasse über ein Hebelsystem gekoppelt, sodass die Ausgleichsmasse und das Bedienelement lediglich gemeinsam bewegbar sind. Das bedeutet, dass bei einer Bewegung des Bedienelements die Ausgleichsmasse über die mechanische Kopplungseinrichtung mit bewegt wird. Darüber hinaus wird bei einem Bewegen der Ausgleichsmasse über die mechanische Kopplungseinrichtung das Bedienelement mit bewegt. Ein Betätigen des Bedienelements führt über die mechanische Kopplungseinrichtung zu einer Bewegung der Ausgleichsmasse entgegen deren Gewichtskraft. Endet die Betätigung des Bedienelements und entfällt somit eine auf das Bedienelement einwirkende Kraft in Richtung der ersten Bewegungsrichtung, dann wird die Ausgleichsmasse aufgrund ihrer Gewichtskraft rückgestellt, wodurch über die mechanische Kopplungseinrichtung das Bedienelement ebenfalls rückgestellt wird. Die zum Betätigen auf das Bedienelement aufgebrachte Kraft wird somit in Form von potentieller Energie in der Ausgleichsmasse eingespeichert und durch das Zurückstellen der Ausgleichsmasse über die Gewichtskraft beim Rückstellen des Bedienelements freigegeben. Somit ermöglicht die Bedieneinrichtung ein besonders einfaches Rückstellen eines manuell betätigbaren Bedienelements. Über das Schalterelement kann einer das Bedienelement bedienenden Person eine haptische Rückmeldung beim Betätigen des Bedienelements durch eine passive haptische Reaktion des Schalterelements auf den Kontakt mit dem Bedienelement und/oder der Ausgleichsmasse und/oder einem weiteren Element über das Bedienelement ausgegeben werden. Das Schalterelement versetzt somit das Bedienelement bei dessen Betätigung zumindest kurzzeitig in Vibration, über welche der das Bedienelement bedienenden Person eine Rückmeldung über das Schließen des Stromkreises gegeben werden kann. Das Bedienelement ermöglicht somit eine besonders einfache passive haptische Rückmeldung für die Person, wobei die haptische Rückmeldung charakterisiert, dass der Stromkreis geschlossen worden ist. Hierbei erfolgt vorteilhafterweise eine gleichmäßige haptische Rückmeldung über eine komplette Fläche des Bedienelements bei konstanter Betätigungskraft.

In einer Ausgestaltung der Erfindung hat es sich als vorteilhaft gezeigt, wenn das Bedienelement eine berührempfindliche Oberfläche aufweist und eine Sperreinrichtung vorgesehen ist, welche dazu eingerichtet ist, eine Relativbewegung des Bedienelements zum Gehäuse bei Ermitteln einer Betätigung der berührempfindlichen Oberfläche freizugeben und bei Ermitteln eines Unterbleibens einer Betätigung der berührempfindlichen Oberfläche zu unterbinden. Das Betätigen der berührempfindlichen Oberfläche kann insbesondere dann ermittelt werden, wenn ein Kontakt zwischen einem Finger einer die berührempfindliche Oberfläche bedienenden Person und der berührempfindlichen Oberfläche ermittelt wird und/oder eine Annäherung des Fingers an die berührempfindliche Oberfläche näher als ein vorgegebener Höchstabstand ermittelt wird. Somit wird das Annähern an die berührempfindliche Oberfläche näher als der vorgegebene Höchstabstand und/oder das Berühren der berührempfindlichen Oberfläche mittels des Fingers als Betätigen der berührempfindlichen Oberfläche betrachtet. Die berührempfindliche Oberfläche kann eine Annäherungssensorik aufweisen. Bei einer ermittelten Annäherung des Fingers an die berührempfindliche Oberfläche kann ein Aktuator der Sperreinrichtung für ein Entsperren vorbereitet werden. Wird das Betätigen der berührempfindlichen Oberfläche des Bedienelements ermittelt, dann wird mittels der Sperreinrichtung eine Bewegung des Bedienelements relativ zum Gehäuse freigegeben. Somit wird mittels der Sperreinrichtung ermöglicht, dass das Bedienelement relativ zum Gehäuse bewegt wird, wenn das Betätigen der berührempfindlichen Oberfläche ermittelt worden ist. Beispielsweise wird mittels der Sperreinrichtung das Bewegen des Bedienelements so lange freigeben, wie die Betätigung der berührempfindlichen Oberfläche ermittelt wird. Wird ermittelt, dass ein Betätigen der berührempfindlichen Oberfläche unterbleibt, dann wird mittels der Sperreinrichtung die Bewegung des Bedienelements relativ zum Gehäuse unterbunden. Hierdurch kann sichergestellt werden, dass das Bedienelement lediglich dann relativ zum Gehäuse bewegt wird, wenn die Person das Bedienelement bewegen möchte. Eine Relativbewegung des Bedienelements relativ zum Gehäuse ohne das Betätigen der berührempfindlichen Oberfläche wird mittels der Sperreinrichtung unterbunden, um eine Bewegung des Bedienelements relativ zum Gehäuse infolge eines Rüttelns des die Bedieneinrichtung aufweisenden Kraftfahrzeugs zu unterbinden. Hierdurch kann die Bedieneinrichtung besonders vorteilhaft vor einer Beschädigung geschützt werden.

In diesem Zusammenhang hat es sich als insbesondere vorteilhaft erwiesen, wenn die Sperreinrichtung ein um eine Schwenkachse schwenkbares ovales Element umfasst. Das ovale Element ist erfindungsgemäß dazu eingerichtet, in einer ersten Ausrichtung, in welcher eine Bewegung des Bedienelements relativ zum Gehäuse freigegeben ist und in einer zweiten Ausrichtung, in welcher eine Bewegung des Bedienelements relativ zum Gehäuse unterbunden ist, angeordnet zu werden. Mittels der Sperreinrichtung ist das ovale Element entweder in der ersten Ausrichtung oder in der zweiten Ausrichtung angeordnet. Die Schwenkachse verläuft hierbei insbesondere senkrecht zur ersten Bewegungsrichtung des Bedienelements. Alternativ zur ovalen Ausgestaltung des Elements kann das Element elliptisch ausgestaltet sein. In der zweiten Ausrichtung ist beispielsweise die Hauptachse des elliptischen Elements parallel zur ersten Bewegungsrichtung des Bedienelements ausgerichtet, wohingegen in der ersten Ausrichtung die Hauptachse des elliptischen Elements senkrecht zur ersten Bewegungsrichtung des Bedienelements ausgerichtet ist. In jeder der Ausrichtungen ist die Hauptachse des elliptischen Elements senkrecht zur Schwenkachse angeordnet, wobei das elliptische Element derart um die Schwenkachse verschwenkt wird, dass die Hauptachse um die Schwenkachse verschwenkt wird. Beispielsweise weist die Sperreinrichtung eine Spindel auf, deren eines Ende mit dem ovalen oder elllipsoiden Element verbunden ist und deren anderes Ende mit einem Aktuator verbunden ist, über welchen die Spindel um die Schwenkachse zum Verstellen des Elements rotierbar ist. Der Aktuator kann beispielsweise mittels eines Elektromotors angetrieben werden, um die Sperreinrichtung zu verstellen. Die Sperreinrichtung ermöglicht ein besonders einfaches Freigeben und Unterbinden der Bewegung des Bedienelements relativ zum Gehäuse. In einer alternativen Ausgestaltung kann die Sperreinrichtung das Bewegen des Bedienelements relativ zum Gehäuse über einen Elektromagnet in Kombination mit einem Dauermagneten freigeben oder unterbinden.

In einer weiteren Ausgestaltung der Erfindung hat es sich als vorteilhaft gezeigt, wenn die mechanische Kopplungseinrichtung in einem Randbereich des Bedienelements mit dem Bedienelement verbunden ist. Insbesondere ist die mechanische Kopplungseinrichtung näher an einem Rand des Bedienelements als an einem Mittelpunkt des Bedienelements mit dem Bedienelement verbunden, wodurch ein gleichmäßiges Bewegen des Bedienelements relativ zum Gehäuse beim manuellen Betätigen des Bedienelements möglich ist. Insbesondere ist die mechanische Kopplungseinrichtung in sich gegenüberliegenden Randbereichen des Bedienelements mit dem Bedienelement verbunden, um über einen Bewegungsausgleich eine gleichmäßige Bewegung des Bedienelements relativ zum Gehäuse beim Betätigen des Bedienelements zu ermöglichen. Beispielsweise ist die mechanische Kopplungseinrichtung an zwei Stellen mit dem Bedienelement verbunden, wobei die beiden Stellen in sich gegenüberliegenden Randbereichen des Bedienelements angeordnet sind. Diese Anordnung ermöglicht ein Unterbinden eines Kippens des Bedienelements relativ zum Gehäuse beim Betätigen des Bedienelements.

In einer weiteren vorteilhaften Ausgestaltung der Erfindung ist vorgesehen, dass die mechanische Kopplungseinrichtung zwei gegeneinander bewegbare Koppelelemente aufweist, welche sich mittig kreuzen und welche jeweils mit deren einen Ende mit dem Bedienelement und mit deren anderen Ende mit der Ausgleichsmasse gewichtsübertragend verbunden sind. Die Koppelelemente sind insbesondere in dem Bereich, in welchem sich die Koppelelemente kreuzen, miteinander verbunden. Mit anderen Worten basiert die mechanische Kopplungseinrichtung bei dieser Ausgestaltung auf einem Scherenprinzip, bei welchem die jeweiligen Koppelelemente beim Bewegen des Bedienelements relativ zum Gehäuse um den Kreuzungspunkt verschwenkt werden. Aufgrund des Anordnens des Bedienelements an dem einen Ende des jeweiligen Koppelelements und der Anordnung der Ausgleichsmasse an dem jeweiligen anderen Ende des jeweiligen Koppelelements wird bei einer jeweiligen Bewegung des Bedienelements in der ersten Bewegungsrichtung die jeweilige über das zugeordnete Koppelelement zugeordnete Ausgleichsmasse relativ zum Gehäuse zumindest in der zweiten Bewegungsrichtung bewegt, welche parallel und entgegengesetzt zur ersten Bewegungsrichtung verläuft. Die jeweiligen einen Enden der Koppelelemente, welche mit dem Bedienelement verbunden sind, sind insbesondere in jeweiligen sich gegenüberliegenden Randbereichen des Bedienelements an dem Bedienelement angeordnet, um ein gleichmäßiges Bewegen des Bedienelements zu erreichen.

In einer alternativen Ausgestaltung der Erfindung hat es sich als vorteilhaft gezeigt, wenn die mechanische Kopplungseinrichtung wenigstens ein am Gehäuse befestigtes Lager aufweist, welches dazu eingerichtet ist, die Bewegung des Bedienelements bei dessen Betätigung auf die Ausgleichsmasse umzulenken, wodurch die Ausgleichsmasse unter Aufbau von potentieller Energie angehoben wird. Das an dem Gehäuse befestigte Lager ist dazu eingerichtet, die Bewegung des Bedienelements relativ zum Gehäuse in der ersten Bewegungsrichtung auf die Ausgleichsmasse umzulenken. Insbesondere wird über das an dem Gehäuse befestigte Lager eine jeweilige Bewegungsrichtung des Bedienelements auf die Ausgleichsmasse und eine jeweilige Bewegungsrichtung der Ausgleichsmasse auf das Bedienelement umgelenkt. Ein Freigeben der über das Anheben der Ausgleichsmasse eingespeicherten potentiellen Energie führt zu einer Rückstellung des Bedienelements. Das Freigeben der potentiellen Energie aus der Ausgleichsmasse erfolgt durch Bewegen der Ausgleichsmasse in Wirkrichtung der Gewichtskraft, welche auf die Ausgleichsmasse wirkt. Über die an dem Gehäuse befestigten Lager ermöglicht die mechanische Kopplungseinrichtung das Bereitstellen eines besonders einfachen Rückstellmechanismus für die Bedieneinrichtung, welche gleichzeitig besonders platzsparend ist.

Ferner hat es sich als vorteilhaft gezeigt, wenn die mechanische Kopplungseinrichtung wenigstens einen Bügel umfasst, welcher mit der ersten Bewegungsrichtung eine Ebene aufspannt und an welchem über jeweilige relativ zueinander fixierte Verbindungselemente das Bedienelement und die Ausgleichsmasse auf sich gegenüberliegenden Seiten der Ebene oberhalb des Bügels gehalten sind. Mit anderen Worten umfasst die mechanische Kopplungseinrichtung den Bügel, welcher sich parallel zum Bedienelement erstreckt und an seinen jeweiligen Enden über erste Verbindungselemente in jeweiligen sich gegenüberliegenden Randbereichen des Bedienelements mit dem Bedienelement verbunden ist. Der Bügel ist über das am Gehäuse befestigte wenigstens eine Lager um eine Längserstreckungsrichtung des Bügels schwenkbar am Gehäuse gehalten. An dem Bügel sind die jeweiligen Verbindungselemente relativ zueinander fixiert und relativ zu dem Bügel fest angeordnet. Über zu den mit dem Bedienelement kontaktierten ersten Verbindungselementen unterschiedliche zweite Verbindungselemente ist die Ausgleichsmasse mit dem Bügel verbunden. Die Ausgleichsmasse ist entlang der ersten Bewegungsrichtung zwischen dem wenigstens einen Bügel und dem Bedienelement angeordnet, sodass sämtliche Verbindungselemente entlang der ersten Bewegungsrichtung oberhalb des Bügels angeordnet sind. Wird das Bügelelement in der ersten Bewegungsrichtung bewegt, dann wird über die jeweiligen Verbindungselemente die Ausgleichsmasse um den Bügel verschwenkt und hierdurch zumindest in der zweiten Bewegungsrichtung, insbesondere entgegen der ersten Bewegungsrichtung, bewegt. Das Umlenken der Bewegung des Bedienelements über den Bügel wird als Bügelprinzip bezeichnet. Die über das Bügelprinzip wirkende mechanische Kopplungseinrichtung ist insbesondere besonders platzsparend, sodass die Bedieneinrichtung bauraumoptimiert ausgebildet ist.

In weiterer alternativer vorteilhafter Ausgestaltung der Erfindung ist vorgesehen, dass die mechanische Kopplungseinrichtung wenigstens ein über das Lager kippbares Waagenelement umfasst, mit welchem einenends über wenigstens ein erstes Verbindungselement das Bedienelement verbunden ist und anderenends über wenigstens ein zweites Verbindungselement die Ausgleichsmasse verbunden ist. In dieser Ausgestaltung der mechanischen Kopplungseinrichtung wird die Bewegung des Bedienelements relativ zum Gehäuse über ein Waagenprinzip auf die Ausgleichsmasse umgelenkt. Die Bewegung des Bedienelements wird über das wenigstens eine erste Verbindungselement auf das Waagenelement übertragen, welches infolge der Bewegung des Bedienelements relativ zum Gehäuse um das Lager gekippt wird. Infolge der Kippbewegung des Waagenelements wird die Bewegung über das zweite Verbindungselement auf die Ausgleichsmasse übertragen. Das Bewegen des Bedienelements in der ersten Bewegungsrichtung, insbesondere ein Herunterdrücken des Bedienelements, für zu einem Anheben der Ausgleichsmasse und einem Einspeichern von Bewegungsenergie des Bedienelements als potentielle Energie der Ausgleichsmasse. Aufgrund des über das wenigstens eine kippbare Waagenelement sowie das Lager bereitgestellten Waagenprinzips ist die Bewegung des Bedienelements besonders einfach mit einer Bewegung der Ausgleichsmasse koppelbar, um ein Rückstellen des Bedienelements über die Ausgleichsmasse zu ermöglichen.

In weiterer Ausgestaltung der Erfindung hat es sich als vorteilhaft gezeigt, wenn das Schalterelement der Ausgleichsmasse zugewandt an dem Bedienelement und/oder dem Bedienelement zugewandt an der Ausgleichsmasse und/oder dem Bedienelement zugewandt an einer Kreuzung der Koppelelemente, insbesondere dem Kreuzungspunkt, angeordnet ist. Insbesondere wird das Schalterelement durch ein Komprimieren des Schalterelements entlang der ersten Bewegungsrichtung betätigt. Das Komprimieren des Schalterelements erfolgt durch Einklemmen des Schalterelements zwischen dem Bedienelement und der Ausgleichsmasse oder der Kreuzung. Hierfür kann das Schalterelement an dem Bedienelement oder an der Ausgleichsmasse oder an der Kreuzung angeordnet sein. Infolge des Betätigens des Bedienelements wird das Bedienelement an die Ausgleichsmasse und/oder die Kreuzung angenähert, wodurch das zwischen dem Bedienelement und der Ausgleichsmasse und/oder der Kreuzung angeordnete Schalterelement komprimiert und somit betätigt wird. Die beschriebene Anordnung des Schalterelements ermöglicht ein besonders sicheres Schließen des Stromkreises beim Bewegen des Bedienelements relativ zum Gehäuse.

Ein weiterer Aspekt der Erfindung betrifft ein Kraftfahrzeug mit einer Bedieneinrichtung, wie sie bereits im Zusammenhang mit der erfindungsgemäßen Bedieneinrichtung beschrieben worden ist. Über die Bedieneinrichtung ist wenigstens eine Fahrzeugkomponente des Kraftfahrzeugs besonders sicher bedienbar, wobei einer die Bedieneinrichtung betätigenden Person über das Schalterelement eine haptische Rückmeldung über das Schließen des Stromkreises gegeben werden kann und gleichzeitig über die Ausgleichsmasse das Bedienelement nach dessen Betätigung besonders einfach rückgestellt werden kann.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt:

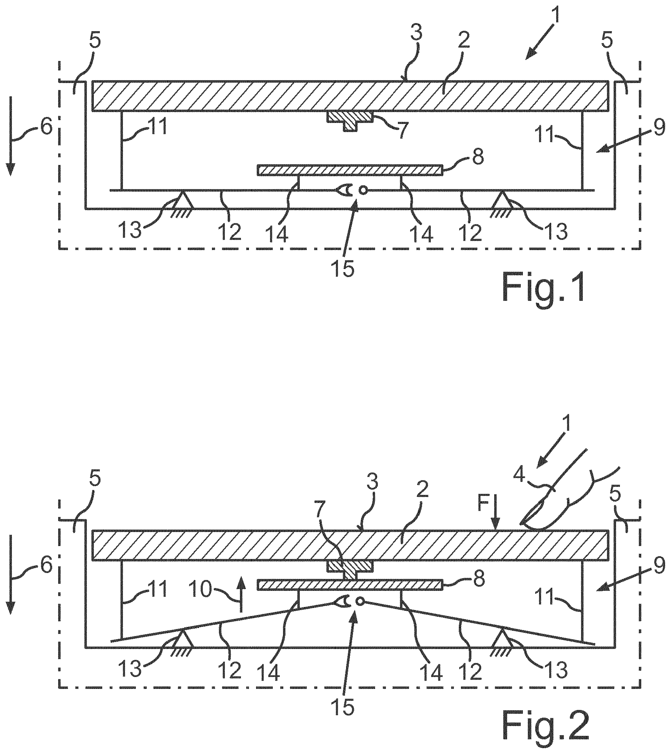

- Fig. 1: eine schematische Schnittansicht einer Bedieneinrichtung für eine Fahrzeugkomponente eines Kraftfahrzeugs mit einem in einem Gehäuse angeordneten Bedienelement, welches bei einer Betätigung relativ zum Gehäuse bewegbar ist und mit einer Ausgleichsmasse, mittels welcher über eine mechanische Kopplungseinrichtung das Bedienelement nach dessen Betätigung über ein Waagenprinzip rückstellbar ist;
- Fig. 2: eine schematische Schnittansicht der Bedieneinrichtung gemäß Fig. 1 in einer betätigten Position, in welcher ein in Bewegungsrichtung des Bedienelements relativ zum Gehäuse zwischen dem Gehäuse und der Ausgleichsmasse angeordnetes Schalterelement betätigt ist, wodurch ein Stromkreis geschlossen wird, welcher wiederum eine Aktion der Fahrzeugkomponente auslöst, wobei bei dem Waagenprinzip die Bewegung des Bedienelements über wenigstens zwei an dem Gehäuse gehaltene Lager auf die Ausgleichsmasse umgelenkt wird;

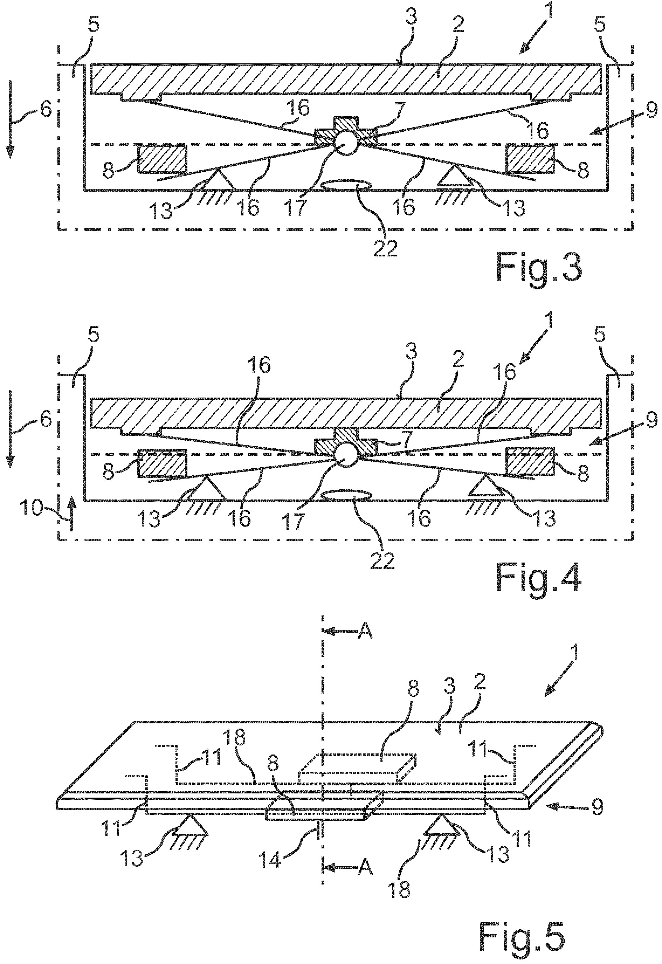

- Fig. 3: eine schematische Schnittansicht der Bedieneinrichtung in einer ersten alternativen Ausführungsform, in welcher die mechanische Kopplungseinrichtung nach einem Scherenprinzip die Bewegung des Bedienelements auf die Ausgleichsmasse umlenkt;
- Fig. 4: eine schematische Schnittansicht der Bedieneinrichtung nach Fig. 3, wobei das Schalterelement an einem Kreuzungspunkt zweier das Scherenprinzip bereitstellender Koppelelemente angeordnet ist und infolge eines Kontakts mit dem Bedienelement betätigt ist,
- Fig. 5: eine schematische Perspektivansicht einer zweiten alternativen Ausführungsform der Bedieneinrichtung, bei welcher die mechanische Kopplungseinrichtung durch ein Bügelprinzip bereitgestellt wird, welches zwei um deren Längsachse verschwenkbare Bügelelemente umfasst, über welche bei einer Bewegung des Bedienelements in der ersten Bewegungsrichtung die Ausgleichsmasse um die jeweiligen Bügelelemente zumindest mit einem entgegen einer auf die Ausgleichsmasse wirkenden Gewichtskraft ausgerichteten Bewegungsrichtung verschwenkt wird, wodurch potentielle Energie in der Ausgleichsmasse eingespeichert wird;

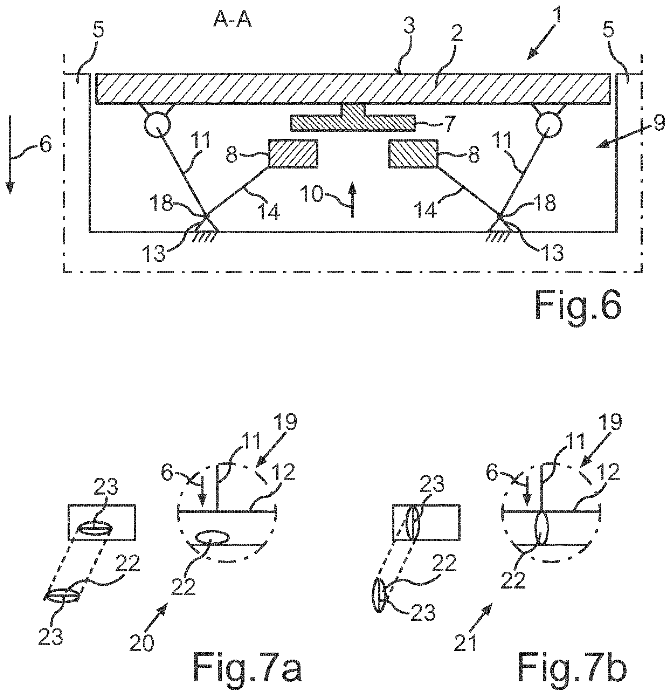

- Fig. 6: einen schematischen Schnitt durch die in Fig. 5 dargestellte Bedieneinrichtung entlang der Schnittlinie A-A, wobei die Ausgleichsmasse und das Bedienelement über jeweilige Verbindungselemente mit den jeweiligen Bügeln verbunden sind; und
- Fig. 7a-7b: jeweilige schematische Seitenansichten beziehungsweise Perspektivansichten einer Sperreinrichtung, welche dazu eingerichtet ist, eine Relativbewegung des Bedienelements zum Gehäuse in ihrer in Fig. 7a dargestellten ersten Ausrichtung freizugeben und in einer in Fig. 7b dargestellten zweiten Ausrichtung zu unterbinden.

Bei den im Folgenden erläuterten Ausführungsbeispielen handelt es sich um bevorzugte Ausführungsformen der Erfindung.

In den Figuren bezeichnen gleiche Bezugszeichen jeweils funktionsgleiche Elemente.

In den Fig. 1 bis 6 ist in jeweiligen unterschiedlichen Ausführungsformen eine Bedieneinrichtung 1 für eine Fahrzeugkomponente eines Kraftfahrzeugs dargestellt. Bei der Bedieneinrichtung 1 handelt es sich vorliegend um eine Eingabeeinrichtung zum Erfassen einer manuellen Eingabe einer Person. Die Bedieneinrichtung 1 ist insbesondere in einem Innenraum des Kraftfahrzeugs, insbesondere eines Kraftwagens, insbesondere eines Personenkraftwagens, angeordnet. Zum Erfassen der manuellen Eingabe umfasst die Bedieneinrichtung 1 ein Bedienelement 2, welches vorliegend als Bildschirmeinrichtung mit einer berührempfindlichen Oberfläche 3 ausgebildet ist. Über die berührempfindliche Oberfläche 3 des Bedienelements 2 ist eine Annäherung und/oder eine Berührung des Bedienelements 2 durch einen Finger 4 der Person ermittelbar.

Das Bedienelement 2 ist vorliegend von einem Gehäuse 5 umrahmt. Um der das Bedienelement 2 bedienenden Person eine haptische Rückmeldung hinsichtlich einer Betätigung der Bedieneinrichtung1 geben zu können, ist es vorgesehen, dass das Bedienelement 2 relativ zum Gehäuse 5 bewegbar ist. Um die Bedieneinrichtung 1 zu betätigen, ist das Bedienelement 2 relativ zum Gehäuse 5 in eine ersten Bewegungsrichtung 6 manuell bewegbar. Um der Person ein haptisches Feedback zu geben und um bei der Betätigung des Bedienelements 2 einen Stromkreis zu schließen, um hierdurch eine Aktion der Fahrzeugkomponente auszulösen, ist ein Schalterelement 7 vorgesehen. Bei der Betätigung des Bedienelements 2 wird das Schalterelement 7 komprimiert, wodurch der Stromkreis geschlossen wird. Bei dem Schalterelement 7 handelt es sich vorliegend um einen Mikroschalter und/oder um eine Silikonschnappscheibe und/oder um ein Piezoelement. Beim Schließen des Stromkreises wird das Bedienelement 2 über eine Verbindung mit dem Schalterelement 7 zumindest kurzzeitig ruckartig bewegt, um für die Person eine haptische Rückmeldung bereitzustellen.

Um nach dem Betätigen des Bedienelements 2 ein besonders einfaches und platzsparendes Rückstellen des Bedienelements 2 zu ermöglichen, ist eine Ausgleichsmasse 8 vorgesehen, welche von einem oder mehreren Elementen bereitgestellt werden kann. Die Ausgleichsmasse 8 ist über eine mechanische Kopplungseinrichtung 9 mit dem Bedienelement 2 gekoppelt. Bei der mechanischen Kopplungseinrichtung 9 handelt es sich vorliegend um ein Hebelsystem, über welches die Bewegung des Bedienelements 2 in der ersten Bewegungsrichtung 6 auf die Ausgleichsmasse 8 umgeleitet wird, sodass sich das Ausgleichselement zumindest in einer zur ersten Bewegungsrichtung 6 unterschiedlichen, zweiten Bewegungsrichtung 10 relativ zum Gehäuse 5 bewegt. Die zweite Bewegungsrichtung 10 verläuft entgegengesetzt zu einer Wirkrichtung einer Gewichtskraft auf die Ausgleichsmasse 8. Somit wird beim Bewegen des Bedienelements 2 relativ zum Gehäuse 5 in der ersten Bewegungsrichtung 6 durch Anheben der Ausgleichsmasse 8 entgegen der Wirkrichtung der Gewichtskraft eine in das Bedienelement 2 eingebrachte Bewegungsenergie als potentielle Energie in der Ausgleichsmasse 8 eingespeichert. Wird die Betätigung des Bedienelements 2 beendet, dann wird durch die auf die Ausgleichsmasse 8 einwirkende Gewichtskraft die Ausgleichsmasse 8 in Wirkrichtung der Gewichtskraft bewegt, wodurch über die mechanische Kopplungseinrichtung 9 das Bedienelement 2 rückgestellt wird.

In den Fig. 1 und 2 ist eine auf einem Waagenprinzip basierende mechanische Kopplungseinrichtung 9 dargestellt. In Fig. 3 und 4 ist die mechanische Kopplungseinrichtung 9 auf einem Scherenprinzip basierend dargestellt und in den Fig. 5 und 6 ist die mechanische Kopplungseinrichtung 9 auf einem Bügelprinzip basierend dargestellt. In jeder der dargestellten Ausführungsformen der Bedieneinrichtung 1 ist die mechanische Kopplungseinrichtung 9 in einem jeweiligen Randbereich, vorliegend in jeweiligen sich gegenüberliegenden Randbereichen des Bedienelements 2, mit dem Bedienelement 2 verbunden. Die Anbindung der mechanischen Kopplungseinrichtung 9 an dem Bedienelement 2 in den sich gegenüberliegenden Randbereichen des Bedienelements 2 ermöglicht, dass bei einer Krafteinwirkung an einer beliebigen Stelle des Bedienelements 2 das Bedienelement 2 gleichmäßig in der ersten Bewegungsrichtung 6 relativ zum Gehäuse 5 bewegt wird.

Bei dem Waagenprinzip ist das Bedienelement 2 über wenigstens zwei erste Verbindungselemente 11 mit jeweiligen ersten Enden jeweiliger Waagenelemente 12 verbunden. Die jeweiligen Waagenelemente 12 sind über jeweilige am Gehäuse 5 angeordnete Lager 13 kippbar. Mit den jeweiligen zweiten Enden der Waagenelemente 12 ist über jeweilige zweite Verbindungselemente 14 die Ausgleichsmasse 8 verbunden. Um ein gleichzeitiges Kippen der beiden Waagenelemente 12 um die Lager 13 beim Betätigen des Bedienelements 2 mit einer mit beiden Waagenelementen 12 verbundenen Ausgleichsmasse 8 umsetzen zu können, ist eine Gelenkeinrichtung 15 vorgesehen, über welche die beiden Waagenelemente 12 gelenkig miteinander verbunden sind. Bei dem Bewegen des Bedienelements 2 in der ersten Bewegungsrichtung 6 werden die Waagenelemente 12 einenends in der ersten Bewegungsrichtung 6 mitbewegt, wodurch die jeweiligen Waagenelemente 12 um die Lager 13 gekippt werden. Das Kippen der Waagenelemente 12 um die Lager 13 bewirkt, dass die über die zweiten Verbindungselemente 14 mit der Ausgleichsmasse 8 verbundenen zweiten Enden der Waagenelemente 12 in der zweiten Bewegungsrichtung 10 bewegt werden. Das Bewegen des Bedienelements 2 in der ersten Bewegungsrichtung 6 und der Ausgleichsmasse 8 in der zweiten Bewegungsrichtung 10 bewirkt, dass sich das erste Bedienelement 2 und die Ausgleichsmasse 8 aufeinander zu bewegen. Das Schalterelement 7 ist bei dem Waagenprinzip entlang der Bewegungsrichtungen 6, 10 zwischen dem Bedienelement 2 und der Ausgleichsmasse 8 angeordnet. Hierbei kann das Schalterelement 7 an dem Bedienelement 2 der Ausgleichsmasse 8 zugewandt oder an der Ausgleichsmasse 8 dem Bedienelement 2 zugewandt angeordnet sein. Durch das Aufeinanderzubewegen der Ausgleichsmasse 8 und des Bedienelements 2 beim Betätigen des Bedienelements 2 wird das Schalterelement 7 zwischen dem Bedienelement 2 und der Ausgleichsmasse 8 durch die Ausgleichsmasse 8 und das Bedienelement 2 komprimiert, wodurch der Stromkreis im Schalterelement 7 geschlossen und die Aktion der Fahrzeugkomponente ausgelöst wird.

Bei dem Scherenprinzip, welches in den Fig. 3 und 4 dargestellt ist, umfasst die mechanische Kopplungseinrichtung 9 wenigstens zwei Koppelelemente 16, welche sich in einem Kreuzungspunkt 17 schneiden. In dem Kreuzungspunkt 17 kreuzen sich die Koppelelemente 16, wobei über den Kreuzungspunkt 17 die Koppelelemente 16 miteinander verbunden sind. Die Koppelelemente 16 sind jeweils einenends mit dem Bedienelement 2 und andernends mit der Ausgleichsmasse 8 verbunden. Bei dem Scherenprinzip ist vorliegend die Ausgleichsmasse 8 von wenigstens zwei Ausgleichselementen bereitgestellt, von welchen jedes der Ausgleichselemente mit einem der Koppelelemente 16 verbunden ist. Somit ist jedes der Koppelelemente 16 einenends mit dem Bedienelement 2 und andernends mit einem der Ausgleichselemente verbunden. Über jeweilige Lager 13 sind die Koppelelemente 16 mit dem Gehäuse 5 verbunden. Vorliegend ist eines der Koppelelemente 16 über ein Festlager und das andere der Koppelelemente 16 über ein Loslager mit dem Gehäuse 5 verbunden. Über das Loslager ist eine jeweilige seitliche Relativbewegung der Koppelelemente 16 zueinander beim Betätigen des Bedienelements 2 ausgleichbar. Über den Kreuzungspunkt 17 ist die Bewegung beim Betätigen des Bedienelements 2 in der ersten Bewegungsrichtung 6 auf das jeweilige zugeordnete Ausgleichselement umlenkbar, um das jeweilige zugeordnete Ausgleichselement in der zweiten Bewegungsrichtung 10 zu bewegen. Bei dem Scherenprinzip werden durch Herunterdrücken des Bedienelements 2 die Ausgleichselemente und somit die Ausgleichsmasse 8 nach oben gedrückt, wodurch Bewegungsenergie der Betätigung des Bedienelements 2 in Form von potentieller Energie in der Ausgleichsmasse 8 eingespeichert wird. Nach dem Betätigen des Bedienelements 2 wird über die Gewichtskraft der Ausgleichsmasse 8 beziehungsweise die Gewichtskraft der Ausgleichselemente das Bedienelement 2 rückgestellt. Bei dem Scherenprinzip ist das Schalterelement 7 zwischen dem Kreuzungspunkt 17 und dem Bedienelement 2 angeordnet. Hierbei kann das Schalterelement 7 an dem Kreuzungspunkt 17 dem Bedienelement 2 zugewandt oder an dem Bedienelement 2 dem Kreuzungspunkt 17 zugewandt angeordnet sein. Bei dem betätigten Bedienelement 2 ist das Schalterelement 7 zwischen dem Bedienelement 2 und dem Kreuzungspunkt 17 eingeklemmt, wodurch das Schalterelement 7 komprimiert und der Stromkreis geschlossen wird. Beim Rückstellen des Bedienelements 2 wird das Schalterelement 7 dekomprimiert, wodurch der Stromkreis geöffnet wird.

In den Fig. 5 und 6 ist die mechanische Kopplungseinrichtung 9 als Bügelprinzip ausgeführt. Hierfür umfasst die mechanische Kopplungseinrichtung 9 wenigstens einen Bügel 18, vorliegend zwei Bügel 18. An dem Bügel 18 ist über jeweilige erste Verbindungselemente 11 das Bedienelement 2 angebunden. Über jeweilige zweite Verbindungselemente 14 ist die Ausgleichsmasse 8 an dem jeweiligen Bügel 18 angebunden. Das Bedienelement 2 ist über die jeweiligen ersten Verbindungselemente 11 derart am Bügel 18 angebunden, dass eine Relativbewegung des Bedienelements 2 zu den jeweiligen ersten Verbindungselementen 11 entlang einer jeweiligen Längserstreckungsrichtung der ersten Verbindungselemente 11 zugelassen ist. Die Ausgleichsmasse 8 ist vorliegend an den jeweiligen zweiten Verbindungselementen 14 fixiert. Die jeweiligen ersten Verbindungselemente 11 sowie die jeweiligen zweiten Verbindungselemente 14 sind in ihrer Ausrichtung sowie in ihrer Anordnung an dem jeweiligen Bügel 18 fixiert, sodass eine jeweilige relative Ausrichtung der ersten Verbindungselemente 11 zu den zweiten Verbindungselementen 14 fest ist. Die ersten Verbindungselemente 11 sind an jeweiligen Enden des jeweiligen zugeordneten Bügels 18 angeordnet. Vorliegend sind die jeweiligen zweiten Verbindungselemente 14 ungefähr mittig an dem jeweiligen Bügel 18 angeordnet.

Der jeweilige Bügel 18 spannt mit der ersten Bewegungsrichtung 6 eine Ebene auf, an deren gegenüberliegenden Seiten die ersten Verbindungselemente 11 und die jeweiligen zur Ebene beziehungsweise dem jeweiligen Bügel 18 zugeordneten zweiten Verbindungselemente 14 angeordnet sind. Das bedeutet, dass - wie im Schnitt durch die Bedieneinrichtung 1 in Fig. 6 bei der Ausgestaltung der mechanischen Kopplungseinrichtung 9 nach dem Bügelprinzip erkannt werden kann - in dem Querschnitt durch die Bügel 18 die ersten Verbindungselemente 11 auf einer ersten Seite seitlich von dem jeweiligen zugeordneten Bügel 18 schräg vom Bügel 18 nach oben abstehend angeordnet sind und das jeweilige dem jeweiligen Bügel 18 zugeordnete zweite Verbindungselement 14 auf der der ersten Seite gegenüberliegenden zweiten Seite seitlich des Bügels 18 schräg vom Bügel 18 nach oben abstehend angeordnet ist. Wird das Bedienelement 2 in der ersten Bewegungsrichtung 6 relativ zum Gehäuse 5 bewegt, dann werden die ersten Verbindungselemente 11 nach unten verschwenkt, wodurch der jeweilige zugeordnete Bügel 18 um dessen Längserstreckungsrichtung rotiert beziehungsweise verschwenkt wird. Das Rotieren des jeweiligen Bügels 18 bewirkt, dass das jeweilige an dem Bügel 18 befestigte zweite Verbindungselement 14 nach oben verschwenkt wird, wodurch die Ausgleichsmasse 8 in der zumindest einen zweiten Bewegungsrichtung 10 angehoben wird. Zwischen dem Bedienelement 2 und der Ausgleichsmasse 8 ist das Schalterelement 7 angeordnet. Vorliegend ist das Schalterelement 7 an dem Bedienelement 2 der Ausgleichsmasse 8 zugewandt angeordnet. Beim Bewegen des Bedienelements 2 in der ersten Bewegungsrichtung 6 wird das Schalterelement 7 zwischen dem Bedienelement 2 und der Ausgleichsmasse 8 komprimiert, wodurch der Stromkreis geschlossen und die Aktion der Fahrzeugkomponente ausgelöst wird. Nach der Betätigung des Bedienelements 2 werden die zweiten Verbindungselemente 14 über die auf die Ausgleichsmasse 8 wirkende Gewichtskraft nach unten zurück verschwenkt. Über den fest mit den zweiten Verbindungselementen 14 verbundenen jeweiligen Bügel 18 werden die zugeordneten ersten Verbindungselemente 11 nach oben verschwenkt, wodurch das Bedienelement 2 rückgestellt wird.

In den Fig. 7a und 7b ist in jeweiligen schematischen Ansichten eine Sperreinrichtung 19 dargestellt, welche dazu eingerichtet ist, die Relativbewegung des Bedienelements 2 zum Gehäuse 5 in einem ersten Zustand freizugeben und in einem zweiten Zustand zu unterbinden. Wird ermittelt, dass die berührempfindliche Oberfläche 3 des Bedienelements 2 von einer Person betätigt wird, insbesondere durch den Finger 4 der Person, dann wird die Relativbewegung des Bedienelements 2 zum Gehäuse 5 mittels der Sperreinrichtung 19 freigegeben. Hierfür ist die Sperreinrichtung 19 in der in Fig. 7a dargestellten ersten Ausrichtung 20 anordenbar. Wird ein Unterbleiben einer Betätigung der berührempfindlichen Oberfläche 3 durch die Person beziehungsweise durch den Finger 4 der Person ermittelt, dann wird mittels der Sperreinrichtung 19 die Relativbewegung des Bedienelements 2 relativ zum Gehäuse 5 unterbunden. Zum Unterbinden der Relativbewegung des Bedienelements 2 relativ zum Gehäuse 5 wird die Sperreinrichtung 19 in einer zweiten Ausrichtung 21, welche in Fig. 7b dargestellt ist, angeordnet. Die Sperreinrichtung 19 weist ein ovales oder elliptisches Element auf, welches im Folgenden als Sperrelement 22 bezeichnet wird.

In den Fig. 7a und 7b ist ein Zusammenwirken des Sperrelements 22 mit dem Waagenprinzip der mechanischen Kopplungseinrichtung 9 dargestellt. Das Sperrelement 22 weist eine Hauptachse 23 auf, welche zwei voneinander am weitesten entfernte Punkte eines Querschnitts des Sperrelements 22 miteinander verbindet. In der ersten Ausrichtung 20 des Sperrelements 22 ist die Hauptachse 23 senkrecht zu einer Längserstreckungsrichtung des ersten Verbindungselements 11 angeordnet, sodass das Sperrelement 22 eine Bewegung des ersten Verbindungselements 11 in der ersten Bewegungsrichtung 6 ermöglicht. In der zweiten Ausrichtung 21 ist die Hauptachse 23 des Sperrelements 22 zumindest im Wesentlichen parallel zu einer Längserstreckungsrichtung des ersten Verbindungselements 11 ausgerichtet, wodurch eine Bewegung des ersten Verbindungselements 11 in der ersten Bewegungsrichtung 6 unterbunden wird. In der zweiten Ausrichtung 21 ist somit die Bewegung des Bedienelements 2 in der ersten Bewegungsrichtung 6 unterbunden und somit die Bedieneinrichtung 1 gesperrt.

Der beschriebenen Bedieneinrichtung 1 liegt die Erkenntnis zugrunde, dass aktuell eine Displayhaptik über aktive Elemente wie Hubankermagnete im Stand der Technik umgesetzt werden. Zudem werden für diesen Einsatz der aktiven Elemente eine Kraftsensorik, insbesondere wenigstens drei optische oder induktive Sensoren, und eine akustische Rückmeldung über einen Lautsprecher benötigt. Dieses System der Displayhaptik des Stands der Technik benötigt eine genaue Abstimmung von Einzelkomponenten insbesondere von Aktuatoren wie den Hubankermagneten, der Kraftsensorik sowie des Lautsprechers. Bei diesem System sind Latenzzeiten zueinander sehr relevant und tragen teilweise zu einem trägen System bei. Nachteilig an dem derzeitigen Stand der Technik sind hohe Kosten, ein hohes Gewicht, ein hoher Bauraumbedarf, ein hoher Abstimmaufwand sowie eine träge Haptik. Überdies sind eine Akustik, eine Haptik und eine Kraft in jeweils getrennten Systemen miteinander abzustimmen.

Die Bedieneinrichtung 1 stellt eine passive Haptik für das Bedienelement 2, bei welchem es sich insbesondere um ein Display handelt, bereit. Dies hat den Vorteil, dass keine aktiven Aktuatoren, Kraftsensoren oder Lautsprecher benötigt werden. Die Bedieneinrichtung 1 weist eine passive Haptik mit dem Bedienelement 2 als schwerem Betätiger auf, wobei als passives Haptikelement das Schalterelement 7 über eine Hebeleinrichtung bedienbar ist. Die Hebeleinrichtung kann als Scheren- und/oder Bügel- und/oder Waagen-Lösung umgesetzt sein. Bei der Bedieneinrichtung 1 wird ein Gewicht des Bedienelements 2, welches als Touchdisplay ausgebildet sein kann, über die Ausgleichsmasse 8 ausgeglichen, wie bei einem Tilger beziehungsweise wie bei einer Waage. Die Bedieneinrichtung 1 ermöglicht ein Vermeiden einer Fehlbedienung einer passiven Haptik über die berührempfindliche Oberfläche 3. Die Hebeleinrichtung wird über die Sperreinrichtung 19, insbesondere das Sperrelement 22 als Aktuator, erst freigegeben, wenn eine Berührung beziehungsweise ein Druckpunkt auf der berührempfindlichen Oberfläche 3 ermittelt worden ist. Somit wird verhindert, dass das passive Haptikelement während einer Fahrt des die Bedieneinrichtung 1 aufweisenden Kraftfahrzeugs fehlbedient wird oder auf einer Rüttelstrecke selbst auslöst. Das Verstellen des Sperrelements 22 kann über einen Motor und/oder über einen Elektromagneten mittels eines Verstellmechanismus erfolgen.

Vorteilhaft an der Bedieneinrichtung 1 sind deren geringe Kosten, deren geringes Gewicht sowie deren geringer Bauraumbedarf. Es besteht ein besonders geringer Abstimmaufwand und eine schnelle Haptik kann bereitgestellt werden. Überdies besteht ein Impulseintrag von zirka 0 und eine Akustik sowie eine Haptik sind in einem einzigen Element, vorliegend dem Schalterelement 7, bereitgestellt.

## Patentansprüche

1. Bedieneinrichtung (1) für eine Fahrzeugkomponente eines Kraftfahrzeugs, mit
- einem Gehäuse (5),
- einem an dem Gehäuse (5) angeordneten Bedienelement (2), welches dazu eingerichtet ist, bei einer Betätigung relativ zum Gehäuse (5) in eine erste Bewegungsrichtung (6) manuell bewegt zu werden, und
- einem Schalterelement (7), welches dazu eingerichtet ist, bei der Betätigung des Bedienelements (2) einen Stromkreis zu schließen um eine Aktion der Fahrzeugkomponente auszulösen,
**gekennzeichnet durch**
eine mit dem Bedienelement (2) gekoppelte Ausgleichsmasse (8), welche dazu eingerichtet ist, über eine mechanische Kopplungseinrichtung (9) zumindest in einer zur ersten Bewegungsrichtung (6) unterschiedlichen, zweiten Bewegungsrichtung (10) bei einer Betätigung des Bedienelements (2) bewegt zu werden und das Bedienelement (2) nach dessen Betätigung über eine Gewichtskraft der Ausgleichsmasse (8) rückzustellen.

2. Bedieneinrichtung (1) nach Anspruch 1, wobei das Bedienelement (2) eine berührempfindliche Oberfläche (3) aufweist und wobei eine Sperreinrichtung (19) vorgesehen ist, welche dazu eingerichtet ist, eine Relativbewegung des Bedienelements (2) zum Gehäuse (5) bei Ermitteln einer Betätigung der berührempfindlichen Oberfläche (3) freizugeben und bei Ermitteln eines Unterbleibens einer Betätigung der berührempfindlichen Oberfläche (3) zu unterbinden.

3. Bedieneinrichtung (1) nach Anspruch 2, wobei die Sperreinrichtung (19) ein um eine Schwenkachse schwenkbares ovales Element (22) umfasst, welches dazu eingerichtet ist, in einer ersten Ausrichtung (20), in welcher eine Bewegung des Bedienelements (2) freigegeben ist, und in einer zweiten Ausrichtung (21), in welcher eine Bewegung des Bedienelements (2) unterbunden ist, angeordnet zu werden.

4. Bedieneinrichtung (1) nach einem der vorhergehenden Ansprüche, wobei die mechanische Kopplungseinrichtung (9) in einem Randbereich des Bedienelements (2) mit dem Bedienelement (2) verbunden ist.

5. Bedieneinrichtung (1) nach einem der vorhergehenden Ansprüche, wobei die mechanische Kopplungseinrichtung (9) zwei gegeneinander bewegbare Koppelelemente (16) aufweist, welche sich mittig kreuzen und welche jeweils mit einem Ende mit dem Bedienelement (2) und mit dem anderen Ende mit der Ausgleichsmasse (8) gewichtsübertragend verbunden sind.

6. Bedieneinrichtung (1) nach einem der vorhergehenden Ansprüche 1 bis 4, wobei die mechanische Kopplungseinrichtung (9) wenigstens ein am Gehäuse (5) befestigtes Lager (13) aufweist, welches dazu eingerichtet ist, die Bewegung des Bedienelements (2) bei der Betätigung auf die Ausgleichsmasse (8) umzulenken, wodurch die Ausgleichsmasse (8) unter Aufbau von potentieller Energie angehoben wird.

7. Bedieneinrichtung (1) nach einem der vorhergehenden Ansprüche 1 bis 4 oder nach Anspruch 6, wobei die mechanische Kopplungseinrichtung (9) wenigstens einen Bügel (18) umfasst, welcher mit der ersten Bewegungsrichtung eine Ebene aufspannt und an welchem über jeweilige relativ zueinander fixierte Verbindungselemente (11, 14) das Bedienelement (2) und die Ausgleichsmasse (8) auf sich gegenüberliegenden Seiten der Ebene oberhalb des Bügels (18) gehalten sind.

8. Bedieneinrichtung (1) nach einem der vorhergehenden Ansprüche 1 bis 4 oder nach Anspruch 6, wobei die mechanische Kopplungseinrichtung (9) wenigstens ein über das Lager (13) kippbares Waagenelement (12) umfasst, mit welchem einenends über ein erstes Verbindungselement (11) das Bedienelement (2) verbunden ist und anderenends über ein zweites Verbindungselement (14) die Ausgleichsmasse (8) verbunden ist.

9. Bedieneinrichtung (1) nach einem der vorhergehenden Ansprüche, wobei das Schalterelement (7) der Ausgleichsmasse (8) zugewandt an dem Bedienelement (2) und/oder dem Bedienelement (2) zugewandt an der Ausgleichsmasse (8) und/oder dem Bedienelement (2) zugewandt an der Kreuzung (17) der Koppelelemente (16) angeordnet ist.

10. Kraftfahrzeug mit einer Bedieneinrichtung (1) nach einem der vorhergehenden Ansprüche.

## Claims

1. Operator control apparatus (1) for a vehicle component of a vehicle, comprising
- a housing (5),
- an operator control element (2) arranged on the housing (5), which is adapted to be manually moved relative to the housing (5) in a first direction of movement (6) when actuated, and
- a switch element (7) which is adapted to close an electric circuit upon actuation of the operator control element (2) in order to initiate an action of the vehicle component,
**characterised by**
a compensating mass (8) which is coupled to the operator control element (2) and is adapted to be moved via a mechanical coupling apparatus (9) at least in a second direction of movement (10) that is different from the first direction of movement (6) when the operator control element (2) is actuated and to reset the operator control element (2) after it has been actuated via a weight force of the compensating mass (8).

2. Operator control apparatus (1) according to claim 1, wherein the operator control element (2) has a touch-sensitive surface (3) and wherein a blocking apparatus (19) is provided, which is adapted to cause a relative movement of the operator control element (2) towards the housing (5) when an actuation of the touch-sensitive surface (3) is detected and to prevent said relative movement when a failure to actuate the touch-sensitive surface (3) is detected.

3. Operator control apparatus (1) according to claim 2, wherein the locking apparatus (19) comprises an oval element (22) which can be pivoted about a pivot axis and is adapted to be arranged in a first orientation (20), in which a movement of the operator control element (2) is enabled, and in a second orientation (21), in which a movement of the operator control element (2) is prevented.

4. Operator control apparatus (1) according to any one of the preceding claims, wherein the mechanical coupling apparatus (9) is connected to the operator control element (2) at an edge region of the operator control element (2).

5. Operator control apparatus (1) according to any one of the preceding claims, wherein the mechanical coupling apparatus (9) has two coupling elements (16), which are movable relative to one another and which cross centrally and which are connected in a weight-transmitting manner respectively at one end to the operator control element (2) and at the other end to the compensating mass (8).

6. Operator control apparatus (1) according to any one of the preceding claims 1 to 4, wherein the mechanical coupling apparatus (9) has at least one bearing (13) which is fastened to the housing (5) and is adapted to deflect the movement of the operator control element (2) during actuation onto the compensating mass (8), as a result of which the compensating mass (8) is lifted while accumulating potential energy.

7. Operator control apparatus (1) according to any one of the preceding claims 1 to 4 or according to claim 6, wherein the mechanical coupling apparatus (9) comprises at least one bracket (18) that spans a plane with the first direction of movement and on which, via respective connecting elements (11, 14) that are fixed relative to one another, the operator control element (2) and the compensating mass (8) are held above the bracket (18), on opposite sides of the plane.

8. Operator control apparatus (1) according to any one of the preceding claims 1 to 4 or according to claim 6, wherein the mechanical coupling apparatus (9) comprises at least one balance element (12) which can be tilted via the bearing (13), with which the operator control element (2) is connected at one end via a first connecting element (11) and the balancing mass (8) is connected at the other end via a second connecting element (14).

9. Operator control apparatus (1) according to any one of the preceding claims, wherein the switch element (7) is arranged facing the compensating mass (8) on the operator control element (2) and/or facing the operator control element (2) on the compensating mass (8) and/or facing the operator control element (2) on the intersection (17) of the coupling elements (16).

10. Motor vehicle comprising an operator control apparatus (1) according to any one of the preceding claims.

## Revendications

1. Appareil de commande (1) pour un composant de véhicule d'un véhicule automobile, comprenant
- un boîtier (5),
- un élément de commande (2) agencé au niveau du boîtier (5) qui est conçu pour être déplacé manuellement dans une première direction de déplacement (6) par rapport au boîtier (5) lors d'un actionnement, et
- un élément commutateur (7) qui est conçu pour fermer un circuit électrique lors de l'actionnement de l'élément de commande (2) afin de déclencher une action du composant de véhicule,
**caractérisé par**
une masse d'équilibrage (8) couplée à l'élément de commande (2) qui est conçue pour, lors d'un actionnement de l'élément de commande (2), être déplacée par l'intermédiaire d'un appareil mécanique de couplage (9) au moins dans une seconde direction de déplacement (10) différente de la première direction de déplacement (6) et pour rappeler l'élément de commande (2), après son actionnement, par l'intermédiaire de la force pondérale de la masse d'équilibrage (8).

2. Appareil de commande (1) selon la revendication 1, dans lequel l'élément de commande (2) présente une surface tactile (3) et dans lequel un appareil de blocage (19) est prévu, qui est conçu pour autoriser un déplacement relatif de l'élément de commande (2) par rapport au boîtier (5) lorsqu'un actionnement de la surface tactile (3) est détecté et pour l'empêcher lorsqu'une absence d'actionnement de la surface tactile (3) est détectée.

3. Appareil de commande (1) selon la revendication 2, dans lequel l'appareil de blocage (19) comprend un élément ovale (22) pouvant être pivoté autour d'un axe de pivotement et qui est conçu pour être agencé selon une première orientation (20) dans laquelle un déplacement de l'appareil d'actionnement (2) est autorisé et selon une seconde orientation (21) dans laquelle un déplacement de l'élément de commande (2) est empêché.

4. Appareil de commande (1) selon l'une quelconque des revendications précédentes, dans lequel l'appareil mécanique de couplage (9) est relié à l'élément de commande (2) dans une région de bord de l'élément de commande (2).

5. Appareil de commande (1) selon l'une quelconque des revendications précédentes, dans lequel l'appareil mécanique de couplage (9) présente deux éléments de couplage (16) pouvant être déplacés l'un par rapport à l'autre et se croisant de manière centrale et reliés respectivement par une extrémité à l'élément de commande (2) et par l'autre extrémité à la masse d'équilibrage (8) de manière à transmettre leur poids.

6. Appareil de commande (1) selon l'une quelconque des revendications précédentes 1 à 4, dans lequel l'appareil mécanique de couplage (9) présente au moins un palier (13) fixé au boîtier (5) et conçu pour rediriger le déplacement de l'élément de commande (2) vers la masse d'équilibrage (8) lors de l'actionnement, ce qui fait que la masse d'équilibrage (8) est soulevée avec accumulation d'énergie potentielle.

7. Appareil de commande (1) selon l'une quelconque des revendications précédentes 1 à 4 ou selon la revendication 6, dans lequel l'appareil mécanique de couplage (9) comprend au moins un étrier (18) dont la première direction de déplacement s'étend dans un plan et au niveau duquel l'élément de commande (2) et la masse d'équilibrage (8) sont maintenus sur des côtés opposés du plan au-dessus de l'étrier (18) par l'intermédiaire d'éléments de liaison (11, 14) respectivement immobilisés l'un par rapport à l'autre.

8. Appareil de commande (1) selon l'une quelconque des revendications précédentes 1 à 4 ou selon la revendication 6, dans lequel l'appareil mécanique de couplage (9) comprend au moins un élément de bascule (12) pouvant être basculé par l'intermédiaire du palier (13) et auquel l'élément de commande (2) est relié par une extrémité par l'intermédiaire d'un premier élément de liaison (11) et auquel la masse d'équilibrage (8) est reliée par l'autre extrémité par l'intermédiaire d'un second élément de liaison (14).

9. Appareil de commande (1) selon l'une quelconque des revendications précédentes, dans lequel l'élément commutateur (7) est agencé au niveau de l'élément de commande (2) de manière à être tourné vers la masse d'équilibrage (8) et/ou est agencé au niveau de la masse d'équilibrage (8) de manière à être tourné vers l'élément de commande (2) et/ou est agencé au niveau du croisement (17) des éléments de couplage (16) de manière à être tourné vers l'élément de commande (2).

10. Véhicule automobile comprenant un appareil de commande (1) selon l'une quelconque des revendications précédentes.
